# EUROPEAN PATENT APPLICATION

(11) **EP 4 428 675 A1**
(43) Date of publication of application: **11.09.2024**
(21) Application number: 22897966.2
(22) Date of filing: 28.11.2022
(51) Int. Cl.: G06F 8/30

(54) **CLOUD TECHNOLOGY-BASED GRAPHIC PROGRAM ONLINE DEVELOPMENT METHOD AND SYSTEM, AND RELATED DEVICE**

(30) Priority: 29.11.2021 CN 202111436587
(71) Applicant: Huawei Cloud Computing Technologies Co., Ltd., Gui'an New District, Guizhou 550025 (CN)
(72) Inventor: CHEN, Pu, Guiyang, Guizhou 550025 (CN)
(74) Representative: Körber, Martin Hans
(86) International application number: PCT/CN2022/134713
(87) International publication number: WO 2023/093885

(57) **Abstract**

A cloud technology-based graphics program online development method and system, and a related device are provided. The method includes the following steps: A cloud management platform receives a graphics program online development request input by a tenant, selects or creates a cloud instance for image rendering in a cloud instance resource pool, and sets a connection between the cloud instance and a client of the tenant (S410); the cloud instance receives graphics program code sent by the client, and compiles the graphics program code to generate a graphics program, where the graphics program code is input by the tenant to the client (S420); and the cloud instance runs the graphics program to render a graphic, and sends the graphic to the client for display (S430). In this way, a cloud technology-based graphics program online development requirement of the tenant is met, and user experience is improved.

## Description

This application claims priority to Chinese Patent Application No. 202111436587.7, filed with the China National Intellectual Property Administration on November 29, 2021 and entitled "CLOUD TECHNOLOGY-BASED GRAPHICS PROGRAM ONLINE DEVELOPMENT METHOD AND SYSTEM, AND RELATED DEVICE", which is incorporated herein by reference in its entirety.

### TECHNICAL FIELD

This application relates to the field of cloud computing, and in particular, to a cloud technology-based graphics program online development method and system, and a related device.

### BACKGROUND

Cloud technology-based program development is an easy-to-use development tool that can be quickly accessed across a plurality of types of terminals. The cloud technology-based program development means the following: A tenant accesses a cloud instance via a client when developing a program; the cloud instance quickly provides a development environment for the tenant based on a requirement of the tenant; the tenant completes code writing via the client; and the cloud instance compiles and runs code, and then the client displays a program running result. In this way, the tenant performs the development anytime and anywhere.

When the tenant develops a graphics program, the cloud instance needs to perform image rendering before the graphics program can be run. However, the cloud instance usually does not have an image rendering capability. Consequently, the graphics program cannot be run in a cloud technology-based program development manner, and a running result of the graphics program cannot be displayed to the tenant. This brings inconvenience to development of the graphics program.

### SUMMARY

This application provides a cloud technology-based graphics program online development method and system, and a related device, to implement online development of a cloud technology-based graphics program.

According to a first aspect, a cloud technology-based graphics program online development method is provided. The method includes the following steps: A cloud management platform receives a graphics program online development request input by a tenant, selects or creates a cloud instance for image rendering in a cloud instance resource pool, and sets a connection between the cloud instance and a client of the tenant; the cloud instance receives graphics program code sent by the client, and compiles the graphics program code to generate a graphics program, where the graphics program code is input by the tenant to the client; and the cloud instance runs the graphics program to render a graphic, and sends the graphic to the client for display.

In a specific implementation, the client runs in the browser of a terminal device held by the tenant. The client is constructed based on a web page development technology. The web page development technology includes one or more of a hypertext markup language HTML, JavaScript, and cascading style sheets CSS. The terminal device includes a mobile phone, a tablet computer, a personal computer, a smart television, and a game console. The cloud instance includes a virtual machine, a container, or a bare metal server.

According to the method described in the first aspect, the cloud management platform receives the graphics program online development request input by the tenant, and selects or creates the cloud instance for image rendering in the cloud instance resource pool. The cloud instance has an image rendering capability, so that when the cloud instance runs the graphics program, image rendering can be implemented to obtain the graphic. This implements the online development of the cloud technology-based graphics program, and improves user experience.

In a possible implementation, the graphics program online development request includes display configuration information, and the cloud management platform selects or creates, in the cloud instance resource pool, a cloud instance matching the display configuration information.

Optionally, the display configuration information includes a rendering mode, where the rendering mode includes a software rendering mode, a local hardware rendering mode, and a remote hardware rendering mode. Software rendering refers to implementing image rendering by using software. Local hardware rendering refers to implementing image rendering by using a GPU of the cloud instance. Remote hardware rendering refers to implementing image rendering by using a GPU of another computing node that is remotely connected to the cloud instance.

Optionally, the display configuration information includes a rendering parameter, and different rendering modes correspond to different rendering parameters. The following separately describes rendering parameters in various modes in detail.

Specifically, a rendering parameter corresponding to the software rendering mode includes parameter information required when the graphics program is run to perform software rendering, for example, graphics interface information required for the software rendering. The image interface information herein may include a graphics interface type, version information of a graphics interface, a display resolution, and the like, and may further include other parameter information required for a software rendering process. Examples are not described herein one by one. The graphics interface type includes a graphics device interface (graphics device interface, GDI), direct extension (direct extension, DirectX), an open graphics library (open graphics library, OpenGL), a Vulkan interface, and the like. This is not limited in this application. To put it simply, if an API in the graphics program code written by the tenant is an API of OpenGL 4.0, the rendering mode in the graphics program online development request input by the tenant is the software rendering mode, the graphics interface in the rendering parameter is OpenGL, and the version information is 4.0. It should be understood that the foregoing example is used for description. This is not specifically limited in this application.

Specifically, a rendering parameter corresponding to the local hardware rendering mode includes specification information of a local GPU, for example, specification information such as a model, a standard, and a display resolution of a required local GPU, and further includes parameter information required by another local GPU for image rendering. Examples are not described herein one by one. It should be understood that, as a hardware drive apparatus, a GPU cannot be directly used by the tenant. Generally, a GPU vendor provides a GPU driver according to various standards, such as an OpenGL standard and a DirectX 12 standard. A developer writes graphics program code according to these standards. When the graphics program is run, the GPU driver communicates with a driver program of hardware based on the graphics program written by the tenant, to enable a graphics processing function of GPU hardware, to implement image rendering. For example, it is assumed that the API in the graphics program code written by the tenant needs to be implemented by using a GPU driver that supports a DirectX 12 interface. In the rendering parameter input by the tenant, a specification of the local GPU is that the model is RTX5000, an operating system type is Windows, and the standard is DirectX 12. A cloud instance 200 completes, based on the rendering parameter, image rendering by using a GPU tenant-state driver that supports the DirectX 12 interface. It should be understood that the foregoing example is used for description. This is not limited in this application.

Specifically, a rendering parameter corresponding to the remote hardware rendering mode includes specification information of a remote GPU, for example, a specification, a standard, a display resolution, and information about a local operating system of the remote GPU, and further includes parameter information required when another remote GPU performs image rendering. Examples are not described herein one by one. For descriptions of a specification and a standard of remote hardware, refer to the descriptions of the local hardware rendering. Details are not described herein again.

It should be understood that the tenant determines a rendering mode according to a service requirement of the tenant. For example, if a low image rendering capability is required by the tenant, the tenant may select the software rendering mode to perform image rendering. If a high image rendering capability is required by the tenant, the tenant may select the local or the remote hardware rendering. If the tenant frequently develops graphics programs, the tenant may select the local hardware rendering. If the tenant occasionally develops graphics programs, the tenant may select the remote hardware rendering to reduce development costs. After determining each rendering mode, the tenant may determine a corresponding rendering parameter according to a service requirement. For example, in the software rendering mode, if the service requirement of the tenant is to perform application development by using OpenGL, in the graphics program online development request input by the tenant, the rendering mode is the software rendering, and the corresponding rendering parameter is OpenGL.

Optionally, the display configuration information further includes cloud instance specification information, for example, an operating system specification, a processor specification, a memory specification, a technology stack type, and a life cycle of the cloud instance. The operating system specification includes an operating system type and version information of a cloud instance 400, for example, Windows 10 and Ubuntu 20.04. The processor specification includes parameter information such as memory, a dominant frequency, a quantity of cores, and a quantity of threads of a processor. The memory specification includes parameter information such as a storage capacity and a bandwidth. The technology stack type is a technical stack type of the graphics program code input by the tenant, for example, Java, C/C++, Python, NodeJS, and GO. The life cycle means that after the tenant has not performed any operation on a client 300 for more than a preset waiting time, a connection between the cloud instance 400 and the client 300 is actively disconnected, and the waiting time is the life cycle. The tenant selects a life cycle of 30 minutes, 60 minutes, 4 hours, 24 hours, or "never closed" based on a use habit. It should be understood that the cloud instance specification information is used as an example for description. More or fewer types of specification information are further set based on a requirement of the tenant. For example, if a developer needs to configure an additional database, the specification information further includes a database type, interface information, and the like. This is not limited in this application.

Optionally, the display configuration information further includes a charging mode. The charging mode includes charging by time and charging by demand. The charging by time includes charging by day, by month, by quarter, or by year. The charging by demand includes charging by storage resource and charging by computing resource. The storage resource is a disk storage resource occupied by the cloud instance from creation to deletion. The computing resource is a sum of CPU, memory, and network resources consumed by the cloud instance 400 from creation to deletion. It should be understood that the foregoing charging mode is used for description. This is not specifically limited in this application.

In the foregoing implementation, the graphics program online development request received by the cloud management platform carries the display configuration information, and the display configuration information may include rendering parameters corresponding to a plurality of rendering modes. The user may select different rendering modes and different rendering parameters according to service requirements, so that the cloud technology-based graphics program online development method provided in this application is universal and can be used in more application scenarios. This further improves user experience.

In a possible implementation, in different rendering modes, the cloud management platform may configure a corresponding rendering capability for the cloud instance based on the display configuration information. The following separately describes steps of a method for configuring the cloud instance by the cloud management platform in the software rendering mode, the local hardware rendering mode, and the remote hardware rendering mode.

Optionally, if the rendering mode is the software rendering mode, the rendering parameter includes the graphics interface information required for the software rendering. The cloud management platform selects or creates, in the cloud instance resource pool, a cloud instance matching the cloud instance specification information, and configures a corresponding graphics interface for the cloud instance based on the graphics interface information. When the graphics program is run, the cloud instance invokes the configured graphics interface to implement an image rendering function, to obtain the graphic. For example, if the rendering mode is the software rendering mode, the graphics interface type in the rendering parameter is OpenGL, and a version number is 4.3, after creating or selecting the cloud instance matching the cloud instance specification information, the cloud management platform may configure an OpenGL interface for the cloud instance, and a version number is 4.3. In this way, the cloud instance invokes the interface to implement image rendering when the graphics program is run.

Optionally, if the rendering mode is the local hardware rendering mode, and the rendering parameter includes the specification information of the local GPU, the cloud management platform selects or creates, in the cloud instance resource pool, a cloud instance that matches the cloud instance specification information and the specification information of the local GPU. When the graphics program is run, the cloud instance may invoke a drive interface of the local GPU, and use the local GPU to implement an image rendering function, to obtain the graphic. In a specific implementation, if the local GPU may support a plurality of standard types GPU drivers to complete rendering, the cloud management platform may further configure, based on the rendering parameter, a GPU driver corresponding to the rendering parameter for the created or selected cloud instance. For example, the specification information of the local GPU in the rendering parameter includes: The local GPU model is RTX5000, the standard is DirectX 12, and an image resolution is 800*600. In this case, the cloud management platform may create a cloud instance whose local GPU model is RTX5000, configure a driver whose standard is DirectX 12 for the cloud instance, and set a graphics resolution to 800*600, so that the cloud instance invokes the driver of the local GPU to complete image rendering when the compiled graphics program is run.

Optionally, if the rendering mode is the remote hardware rendering mode, and the rendering parameter includes the specification information of the remote GPU, the cloud management platform selects or creates, in the cloud instance resource pool, a cloud instance matching the cloud instance specification information, obtains, in the cloud instance resource pool, a connection address of a remote GPU matching the specification information of the remote GPU, and sends the connection address to the cloud instance. When the graphics program is run, the cloud instance invokes a driver of the remote GPU based on the connection address of the remote GPU, and uses the remote GPU to implement an image rendering function, to obtain the graphic. For example, if a remote GPU model in the rendering parameter is RTX5000 and a standard is DirectX 12, the cloud management platform may obtain, based on the specification information of the remote GPU in the rendering parameter, a connection address of a remote GPU that meets a condition, authentication token (token) information for maintaining a communication connection between the remote GPU and the cloud instance, and the like, and then send the connection address and the token information to the cloud instance, so that the cloud instance invokes a driver of the remote GPU to complete image rendering when the graphics program is run.

Optionally, the rendering mode further includes a non-image rendering mode. That is, the graphics program code uploaded by the tenant is non-graphics program code, and image rendering does not need to be performed when the non-graphics program code is run. A running result is usually in a form of character string. In this case, the cloud instance runs the graphics program code, and outputs a character string corresponding to the running result to the client for display.

In the foregoing implementation, the cloud management platform configures a corresponding image rendering capability for the cloud instance based on the rendering parameter, for example, a software rendering capability, a local hardware rendering capability, or a remote hardware rendering capability. In this way, the cloud technology-based graphics program online development system provided in this application can support the user to input a plurality of types of graphics program code. This improves user experience.

In a possible implementation, the cloud instance performs image data encoding on the graphic, and then sends an encoding result to the client. After receiving the encoding result, the client may decode the encoding result in a decoding scheme corresponding to an encoding scheme, to obtain the graphic, and display the graphic to the tenant. The encoding scheme may be H.264, H.265, or the like, or may be another encoding scheme or a user-defined encoding scheme. This is not specifically limited in this application.

In a specific implementation, when sending the graphic to the client, the cloud instance may perform data communication with the client by using a web real-time communication (web real-time communication, webRTC) technology. WebRTC is an API that supports a web browser to perform a real-time audio and video conversation.

In the foregoing implementation, the cloud instance performs image data encoding on the graphic and then performs data transmission, so that data transmission security can be improved. In addition, data transmission is performed by using the webRTC technology, and a transmission manner is simple and convenient. A web audio and video communication function is implemented without an additional plug-in or client.

According to a second aspect, a cloud technology-based graphics program online development system is provided. The system includes: a cloud management platform, configured to: receive a graphics program online development request input by a tenant, select or create a cloud instance for image rendering in a cloud instance resource pool, and set a connection between the cloud instance and a client of the tenant; and the cloud instance, configured to: receive graphics program code sent by the client, and compile the graphics program code to generate a graphics program, where the graphics program code is input by the tenant to the client, and the cloud instance is configured to: run the graphics program to render a graphic, and send the graphic to the client for display.

According to the method described in the second aspect, the cloud management platform receives the graphics program online development request input by the tenant, and selects or creates the cloud instance for image rendering in the cloud instance resource pool. The cloud instance has an image rendering capability, so that when the cloud instance runs the graphics program, image rendering can be implemented to obtain the graphic. This implements the online development of the cloud technology-based graphics program, and improves user experience.

In a possible implementation, the graphics program online development request includes display configuration information; and the cloud management platform is configured to select or create, in the cloud instance resource pool, a cloud instance matching the display configuration information.

In a possible implementation, the display configuration information includes cloud instance specification information, a rendering mode, and a rendering parameter, the rendering mode includes one of software rendering, local hardware rendering, or remote hardware rendering, and different rendering modes correspond to different rendering parameters.

In a possible implementation, if the rendering mode is the software rendering, the rendering parameter includes graphics interface information required for the software rendering; the cloud management platform is configured to: select or create, in the cloud instance resource pool, a cloud instance matching the cloud instance specification information, and configure a corresponding graphics interface for the cloud instance based on the graphics interface information; and the cloud instance is configured to: run the graphics program, and invoke the graphics interface to render the graphic.

In a possible implementation, if the rendering mode is the local hardware rendering, the rendering parameter includes specification information of a local graphics processing unit GPU; the cloud management platform is configured to select or create, in the cloud instance resource pool, a cloud instance that matches the cloud instance specification information and the specification information of the local GPU; and the cloud instance is configured to: run the graphics program, invoke a drive interface of the local graphics processing unit GPU, and render the graphic by using the local GPU.

In a possible implementation, if the rendering mode is the remote hardware rendering, the rendering parameter includes specification information of a remote GPU; the cloud management platform is configured to: select or create, in the cloud instance resource pool, a cloud instance matching the cloud instance specification information, obtain a connection address of the remote GPU based on the specification information of the remote GPU, and send the connection address to the cloud instance; and the cloud instance is configured to: run the graphics program, invoke a driver of the remote GPU based on the connection address, and render the graphic by using the remote GPU.

In a possible implementation, the client runs in a browser of a terminal device held by the tenant, the client is constructed based on a web page development technology, and the web page development technology includes one or more of a hypertext markup language HTML, JavaScript, and cascading style sheets CSS.

In a possible implementation, the terminal device includes a mobile phone, a tablet computer, a personal computer, a smart television, and a game console.

In a possible implementation, the cloud instance includes a virtual machine, a container, or a bare metal server.

According to a third aspect, a cloud instance is provided, applied to a cloud technology-based graphics program online development system. The cloud instance includes: a compilation unit, configured to: receive graphics program code sent by a client, and compile the graphics program code to generate a graphics program, where the graphics program code is input by a tenant to the client; a rendering unit, configured to run the graphics program to render a graphic; and an output unit, configured to send the graphic to the client for display.

In a specific implementation, the cloud technology-based graphics program online development system includes a cloud management platform, and the cloud instance is a cloud instance that is selected or created by the cloud management platform in a cloud instance resource pool after the cloud management platform receives display configuration information input by the tenant and that matches the display configuration information.

According to the method described in the third aspect, the cloud management platform receives a graphics program online development request input by the tenant, and selects or creates the cloud instance for image rendering in the cloud instance resource pool. The cloud instance has an image rendering capability, so that when the cloud instance runs the graphics program, image rendering can be implemented to obtain the graphic. This implements the online development of the cloud technology-based graphics program, and improves user experience.

In a possible implementation, the display configuration information includes cloud instance specification information, a rendering mode, and a rendering parameter, the rendering mode includes one of software rendering, local hardware rendering, or remote hardware rendering, and different rendering modes correspond to different rendering parameters.

In a possible implementation, if the rendering mode is the software rendering, the rendering parameter includes graphics interface information required for the software rendering; and the rendering unit is configured to: run the graphics program, and invoke a graphics interface corresponding to the graphics interface information, to render the graphic, where the graphics interface is configured by the cloud management platform for the cloud instance based on the graphics interface information.

In a possible implementation, if the rendering mode is the local hardware rendering, the rendering parameter includes specification information of a local graphics processing unit GPU; and the rendering unit is configured to: run the graphics program, invoke a drive interface of the local graphics processing unit GPU, and render the graphic by using the local GPU.

In a possible implementation, if the rendering mode is the remote hardware rendering, the rendering parameter includes specification information of a remote GPU; and the rendering unit is configured to: run the graphics program, obtain a connection address of the remote GPU corresponding to the specification information of the remote GPU, invoke a driver of the remote GPU, and render the graphic by using the remote GPU, where the connection address of the remote GPU is sent by the cloud management platform to the cloud instance.

According to a fourth aspect, a computing device is provided. The computing device includes a processor and a memory, where the memory stores code, and the processor is configured to perform a function implemented by the cloud management platform, the cloud instance, or the client in the first aspect or any one of the possible implementations of the first aspect.

According to a fifth aspect, a computer-readable storage medium is provided. The computer-readable storage medium stores instructions. When the instructions are run on a computer, the computer is enabled to perform the method according to the foregoing aspects.

In this application, based on the implementations provided in the foregoing aspects, the implementations are further combined to provide more implementations.

### BRIEF DESCRIPTION OF DRAWINGS

FIG. 1 is cloud technology-based program online development system;
FIG. 2 is a diagram of an architecture of a cloud technology-based graphics program online development system according to this application;
FIG. 3 is a diagram of a structure of a cloud technology-based graphics program online development system in a public cloud scenario according to this application;
FIG. 4 is a schematic flowchart of steps of a cloud technology-based graphics program online development method according to this application;
FIG. 5 is an example interface of a client according to this application;
FIG. 6 is another example interface of a client according to this application; and
FIG. 7 is a schematic diagram of a structure of a computing device according to this application.

### DESCRIPTION OF EMBODIMENTS

The following describes technical solutions in embodiments of the present invention with reference to accompanying drawings in embodiments of the present invention. It is clear that the described embodiments are merely some rather than all of embodiments of the present invention. All other embodiments obtained by a person of ordinary skill in the art based on embodiments of the present invention without creative efforts shall fall within the protection scope of the present invention.

First, an application scenario in this application is described.

Cloud technology-based program development is an easy-to-use development tool that can be quickly accessed across a plurality of types of terminals. The cloud technology-based program development means the following: A tenant accesses a cloud instance via a client when developing a program; the cloud instance quickly provides a development environment for the tenant based on a requirement of the tenant; the tenant completes code writing by using a browser; and the cloud instance compiles and runs code, and then the client displays a program running result. In this way, the tenant performs the development anytime and anywhere.

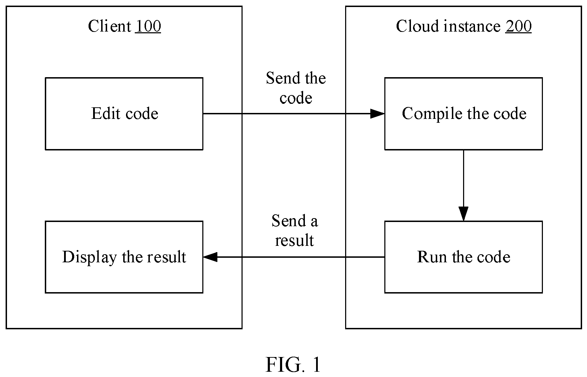

As shown in FIG. 1, FIG. 1 is a schematic diagram of an architecture of a cloud technology-based program development system. As shown in FIG. 1, the program development system includes a client 100 and a cloud instance 200. There is a communication connection between the client 100 and the cloud instance 200. A specific connection manner may be a wired network connection or a wireless network connection. This is not specifically limited in this application.

The client 100 may run on a terminal device held by a tenant. The terminal device is a device on which a browser is deployed, a display is provided, and the tenant can input code, for example, a computer, a smartphone, a palmtop processing device, a tablet computer, a mobile notebook computer, an augmented reality (augmented reality, AR) device, a virtual reality (virtual reality, VR) device, an integrated handheld device, a wearable device, a vehicle-mounted device, a smart conference device, a smart advertising device, or a smart household appliance. This is not specifically limited herein.

Optionally, the client 100 may run in the browser of the terminal device held by the tenant. In a specific implementation, a web-based program editor is deployed in the browser. The program editor is usually constructed based on common web development technologies such as HTML, JavaScript, and CSS. The client 100 interacts with the cloud instance 200 by using a websocket protocol or another communication protocol. This is not specifically limited in this application.

The cloud instance 200 is a bare metal server (Bare Metal Server, BMS), a virtual machine, or a container. The BMS is a general-purpose physical server, for example, an ARM server or an X86 server. The virtual machine is a complete computer system that is implemented by using a network functions virtualization (Network Functions Virtualization, NFV) technology, that has a complete hardware system function and is simulated by using software, and that runs in a completely isolated environment. The container is a group of processes that are isolated from each other and that are limited by resources.

After the client 100 establishes a connection to the cloud instance 200, the client 100 sends a development request of the tenant to the cloud instance 200, where the development request includes a development environment that the tenant needs to establish. The cloud instance 200 establishes a corresponding development environment according to the development requirement. As shown in FIG. 1, after the cloud instance 200 establishes the development environment, when the tenant develops a program, the tenant starts the web-based program editor by using the browser in the client 100, and then completes code writing in the program editor. The client 100 sends compiled code to the cloud instance 200. After receiving a program compilation instruction that is sent by the tenant via the client 100, the cloud instance 200 compiles the code to obtain compiled code. After receiving a running code instruction that is sent by the tenant via the client 100, the cloud instance 200 runs the compiled program code to obtain a running result, and then returns the running result to the client. The client displays the running result to the tenant. This implements the cloud technology-based program development.

When a graphics program is run, the cloud instance 200 needs to invoke a corresponding graphics application programming interface (application programming interface, API) to render a graphic based on the graphics program. However, the cloud instance 200 usually does not have an image rendering capability, and cannot process these graphics APIs. As a result, the graphics program cannot be run in a cloud technology-based program development manner. This brings inconvenience to development of the graphics program.

To resolve the foregoing problem that the graphics program cannot be run in the cloud technology-based program development manner, this application provides a cloud technology-based graphics program online development system. The system configures a cloud instance based on an online development request input by a tenant, and a configured cloud instance has an image rendering capability, so that a graphics program can be run in a cloud technology-based program development manner. This improves user experience.

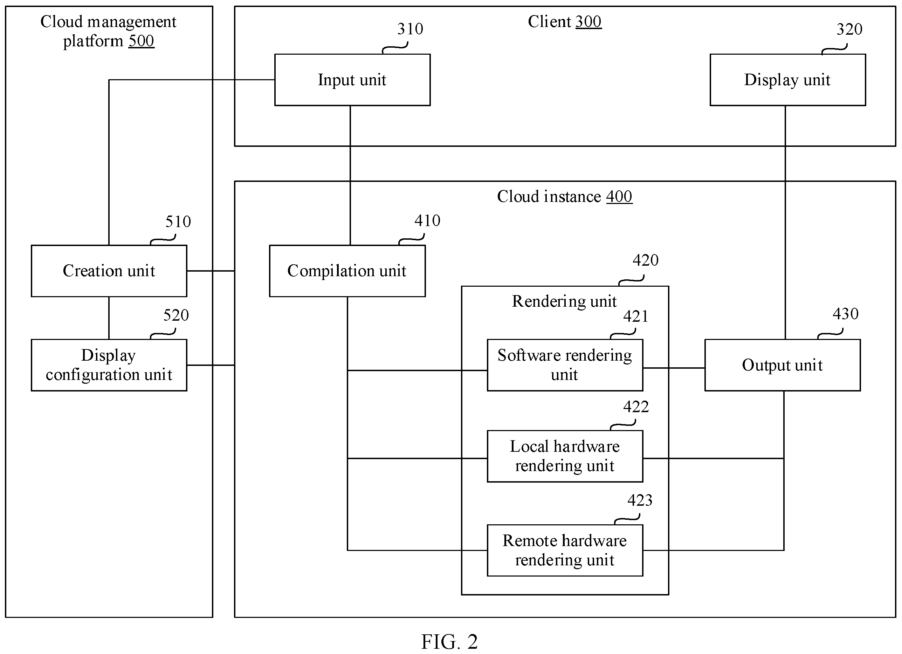

FIG. 2 is a diagram of an architecture of a cloud technology-based graphics program online development system according to this application. As shown in FIG. 2, the development system includes a client 300, a cloud instance 400, and a cloud management platform 500. There are communication connections between the client 300, the cloud instance 400, and the cloud management platform 500. The communication connections may be specifically wired network connections or wireless network connections. This is not specifically limited in this application.

The client 300 is a terminal device held by a tenant. The cloud instance 400 is a bare metal server (Bare Metal Server, BMS), a virtual machine, or a container. The cloud management platform 500 may be implemented by a general-purpose physical server, for example, an ARM server or an X86 server, or may be a virtual machine (virtual machine, VM) implemented by using a network functions virtualization (network functions virtualization, NFV) technology. This is not specifically limited in this application. For descriptions of the foregoing terminal device, BMS, virtual machine, and container, refer to the embodiment in FIG. 1. Details are not described herein again.

The client 300, the cloud instance 400, and the cloud management platform 500 may be further divided into a plurality of modules and units. For example, as shown in FIG. 2, the client 300 includes an input unit 310 and a display unit 320; the cloud instance 400 includes a compilation unit 410, a rendering unit 420, and an output unit 430; and the cloud management platform 500 includes a creation unit 510 and a display configuration unit 520. It should be understood that a division manner shown in FIG. 2 is used as an example for description. The client 300, the cloud instance 400, and the cloud management platform 500 alternatively include more or fewer modules and units. This is not limited in this application.

The input unit 310 in the client 300 is configured to perform human-computer interaction with the tenant, receive a graphics program online development request input by the tenant, and send the graphics program online development request to the cloud management platform 500. The input unit 310 is further configured to receive graphics program code input by the tenant, and send the graphics program code to the cloud instance 400.

The graphics program code is program source code developed by the tenant by using a high-level computer language. The high-level computer language includes a plurality of technical stack types, such as a C language, a C++ language, Fortran, Java, Python, NodeJS, and GO. This is not limited in this application.

In a specific implementation, the input unit 310 may be a web-based program editor in a browser, and the tenant may edit and input the graphics program code by using the program editor. The graphics program online development request may be input by the tenant by using the web-based program editor, or may be input by the tenant by using a new window, a browser page, or a tab page. This is not limited in this application.

In a specific implementation, the input unit 310 may first receive the graphics program online development request, and then receive the graphics program code input by the tenant, or may first receive the graphics program code, and then receive the graphics program online development request input by the tenant. This is not limited in this application. For example, the client may first display, to the tenant, an interface for inputting the graphics program online development request, and then display, to the tenant, the web-based program editor, to obtain the graphics program code input by the tenant; or first display, to the tenant, the web-based program editor, and when detecting that the graphics program code input by the tenant is a graphics program, prompt, in a pop-up window or in another form, the tenant to input the graphics program online development request. It should be understood that the foregoing example is used for description. This is not limited in this application.

In an embodiment, the graphics program online development request includes display configuration information. The display configuration information may be used by the cloud management platform 500 to select or create, in a cloud instance resource pool, a cloud instance matching the display configuration information.

Optionally, the display configuration information includes a rendering mode, where the rendering mode includes a software rendering mode, a local hardware rendering mode, and a remote hardware rendering mode. Software rendering refers to implementing image rendering by using software. Local hardware rendering refers to implementing image rendering by using a GPU of the cloud instance 400. Remote hardware rendering refers to implementing image rendering by using a GPU of another computing node that is remotely connected to the cloud instance 400.

Optionally, the display configuration information includes a rendering parameter, and different rendering modes correspond to different rendering parameters. The following separately describes rendering parameters in various modes in detail.

Specifically, a rendering parameter corresponding to the software rendering mode includes parameter information required when the graphics program is run to perform software rendering, for example, graphics interface information required for the software rendering. The image interface information herein may include a graphics interface type, version information of a graphics interface, a display resolution, and the like, and may further include other parameter information required for a software rendering process. Examples are not described herein one by one. The graphics interface type includes a graphics device interface (graphics device interface, GDI), direct extension (direct extension, DirectX), an open graphics library (open graphics library, OpenGL), a Vulkan interface, and the like. This is not limited in this application. To put it simply, if an API in the graphics program code written by the tenant is an API of OpenGL 4.0, the rendering mode in the graphics program online development request input by the tenant is the software rendering mode, the graphics interface in the rendering parameter is OpenGL, and the version information is 4.0. It should be understood that the foregoing example is used for description. This is not specifically limited in this application.

Specifically, a rendering parameter corresponding to the local hardware rendering mode includes specification information of a local GPU, for example, specification information such as a model, a standard, and a display resolution of a required local GPU, and further includes parameter information required by another local GPU for image rendering. Examples are not described herein one by one. It should be understood that, as a hardware drive apparatus, a GPU cannot be directly used by the tenant. Generally, a GPU vendor provides a GPU driver according to various standards, such as an OpenGL standard and a DirectX 12 standard. A developer writes graphics program code according to these standards. When the graphics program is run, the GPU driver communicates with a driver program of hardware based on the graphics program written by the tenant, to enable a graphics processing function of GPU hardware, to implement image rendering. For example, it is assumed that the API in the graphics program code written by the tenant needs to be implemented by using a GPU driver that supports a DirectX 12 interface. In the rendering parameter input by the tenant, a specification of the local GPU is that the model is RTX5000, an operating system type is Windows, and the standard is DirectX 12. A cloud instance 400 completes, based on the rendering parameter, image rendering by using a GPU tenant-state driver that supports the DirectX 12 interface. It should be understood that the foregoing example is used for description. This is not limited in this application.

Specifically, a rendering parameter corresponding to the remote hardware rendering mode includes specification information of a remote GPU, for example, a specification, a standard, a display resolution, and information about a local operating system of the remote GPU, and further includes parameter information required when another remote GPU performs image rendering. Examples are not described herein one by one. For descriptions of a specification and a standard of remote hardware, refer to the descriptions of the local hardware rendering. Details are not described herein again.

It should be understood that the tenant determines a rendering mode according to a service requirement of the tenant. For example, if a low image rendering capability is required by the tenant, the tenant may select the software rendering mode to perform image rendering. If a high image rendering capability is required by the tenant, the tenant may select the local or the remote hardware rendering. If the tenant frequently develops graphics programs, the tenant may select the local hardware rendering. If the tenant occasionally develops graphics programs, the tenant may select the remote hardware rendering to reduce development costs. After determining each rendering mode, the tenant may determine a corresponding rendering parameter according to a service requirement. For example, in the software rendering mode, if the service requirement of the tenant is to perform application development by using OpenGL, in the graphics program online development request input by the tenant, the rendering mode is the software rendering, and the corresponding rendering parameter is OpenGL.

Optionally, the display configuration information further includes cloud instance specification information, for example, an operating system specification, a processor specification, a memory specification, a technology stack type, and a life cycle of the cloud instance. The operating system specification includes an operating system type and version information of the cloud instance 400, for example, Windows 10 and Ubuntu 20.04. The processor specification includes parameter information such as memory, a dominant frequency, a quantity of cores, and a quantity of threads of a processor. The memory specification includes parameter information such as a storage capacity and a bandwidth. The technology stack type is a technical stack type of the graphics program code input by the tenant, for example, Java, C/C++, Python, NodeJS, and GO. The life cycle means that after the tenant has not performed any operation on the client 300 for more than a preset waiting time, a connection between the cloud instance 400 and the client 300 is actively disconnected, and the waiting time is the life cycle. The tenant selects a life cycle of 30 minutes, 60 minutes, 4 hours, 24 hours, or "never closed" based on a use habit. It should be understood that the cloud instance specification information is used as an example for description. More or fewer types of specification information are further set based on a requirement of the tenant. For example, if a developer needs to configure an additional database, the specification information further includes a database type, interface information, and the like. This is not limited in this application.

Optionally, the display configuration information further includes a charging mode. The charging mode includes charging by time and charging by demand. The charging by time includes charging by day, by month, by quarter, or by year. The charging by demand includes charging by storage resource and charging by computing resource. The storage resource is a disk storage resource occupied by the cloud instance from creation to deletion. The computing resource is a sum of CPU, memory, and network resources consumed by the cloud instance 400 from creation to deletion. It should be understood that the foregoing charging mode is used for description. This is not specifically limited in this application.

The display unit 320 in the client 300 is configured to: receive a graphic sent by the cloud instance 400, where the image is a graphic rendered by the cloud instance 400 by running the graphics program; and display the graphic to the tenant. In a specific implementation, the display unit 320 displays the graphic in the web-based program editor, or may display the graphic by popping up a new window or a tab page. This is not limited in this application.

The creation unit 510 in the cloud management platform 500 is configured to: receive the graphics program online development request sent by the input unit 310, select or create the cloud instance 400 for image rendering in the cloud instance resource pool, and set a connection between the cloud instance 400 and the client 300 of the tenant.

In a specific implementation, the creation unit 510 is configured to select or create, in the cloud instance resource pool, a cloud instance 400 matching the cloud instance specification information. The display configuration unit 520 is configured to further configure a rendering unit of the cloud instance 400 based on a rendering mode and a rendering parameter, so that the rendering unit has a corresponding graphics processing capability.

Optionally, if the rendering mode is the software rendering mode, the rendering parameter includes the graphics interface information required for the software rendering, the creation unit 510 is configured to select or create, in the cloud instance resource pool, the cloud instance 400 matching the cloud instance specification information. The display configuration unit 520 is configured to configure a corresponding graphics interface for a software rendering unit 421 of the cloud instance 400 based on the graphics interface information. For example, if the rendering mode is the software rendering mode, the graphics interface type in the rendering parameter is OpenGL, and a version number is 4.3, after creating or selecting the cloud instance 400 matching the cloud instance specification information, the cloud management platform 500 may configure an OpenGL interface for the software rendering unit 421 of the cloud instance 400, so that the software rendering unit 421 invokes the interface to implement image rendering when the graphics program is run.

Optionally, if the rendering mode is the local hardware rendering mode, and the rendering parameter includes the specification information of the local GPU, the cloud management platform 500 selects or creates, in the cloud instance resource pool, a cloud instance 400 that matches the cloud instance specification information and the specification information of the local GPU. In a specific implementation, if the local GPU may support a plurality of standard types of GPU drivers to complete rendering, the display configuration unit 520 may further configure, based on the rendering parameter, a GPU driver corresponding to the rendering parameter for a local hardware rendering unit 422 of the created or selected cloud instance 400. For example, the specification information of the local GPU in the rendering parameter includes: The local GPU model is RTX5000, the standard is DirectX 12, and an image resolution is 800*600. In this case, the creation unit 510 of the cloud management platform 500 may create a cloud instance 400 whose local GPU model is RTX5000, the display configuration unit 520 configures a driver whose standard is DirectX 12 for the cloud instance 400, and sets a graphics resolution to 800*600, so that the local hardware rendering unit 422 invokes the driver of the local GPU to complete image rendering when the compiled graphics program is run.

Optionally, if the rendering mode is a remote hardware rendering mode, and the rendering parameter includes the specification information of the remote GPU, the creation unit 510 of the cloud management platform 500 selects or creates, in the cloud instance resource pool, the cloud instance 400 matching the cloud instance specification information. The display configuration unit 520 obtains, in the cloud instance resource pool, a connection address of a remote GPU matching the specification information of the remote GPU, sends the connection address to the cloud instance 400, and configures the connection address in a remote hardware rendering unit 423. For example, if a remote GPU model in the rendering parameter is RTX5000 and a standard is DirectX 12, the display configuration unit 520 of the cloud management platform 500 may obtain, based on the specification information of the remote GPU in the rendering parameter, a connection address of a remote GPU that meets a condition, authentication token (token) information for maintaining a communication connection between the remote GPU and the cloud instance 400, and the like, and then send the connection address and the token information to the remote hardware rendering unit 423 of the cloud instance 400, so that the remote hardware rendering unit 423 invokes a driver of the remote GPU to complete image rendering when the graphics program is run.

The compilation unit 410 in the cloud instance 400 is configured to receive the graphics program code sent by the client 300, and compile the graphics program code to obtain the compiled graphics program. Compilation refers to translating one language into another language. For example, a developer develops program source code by using a high-level computer language (for example, a C language or a C++ language), and converts, through compilation, the program source code into machine language code (for example, binary code) for machine recognition and running.

In a specific implementation, before compiling the graphics program code, the compilation unit 410 further checks the graphics program code input by the tenant, for example, syntax validity detection and an identified compilation problem, and feeds back a check result to the client 300 for the tenant to modify. It should be understood that the foregoing example is used for description. This is not limited in this application.

The rendering unit 420 is configured to: when the cloud instance 400 runs the compiled graphics program, load a corresponding type of configured rendering unit to perform image rendering to generate a corresponding graphic.

In a specific implementation, if the rendering mode is the software rendering, after the graphics program is run, the cloud instance 400 loads the previously configured software rendering unit 421, and the software rendering unit 421 runs the graphics program, invokes the previously configured graphics interface to implement a graphics API in the graphics program, and renders the graphic.

Similarly, if the rendering mode is the local hardware rendering, after the graphics program is run, the cloud instance 400 loads the previously configured local hardware rendering unit 422, and the local hardware rendering unit 422 invokes a drive interface of the local GPU, and renders the graphic by using the local GPU.

Similarly, if the rendering mode is the remote hardware rendering, after the graphics program is run, the cloud instance 400 loads the previously configured remote hardware rendering unit 423, and the remote hardware rendering unit 423 obtains the pre-configured connection address of the remote GPU, invokes the driver of the remote GPU, and renders the graphic by using the remote GPU. In a specific implementation, the remote hardware rendering unit 423 may be implemented in a manner of a remote graphics interface, for example, a remote DirectX interface, a remote OpenGL interface, or another remote graphics interface. This is not specifically limited in this application.

In an embodiment, the cloud instance 400 may further include a display control unit, where the display control unit may be implemented by using a dynamic link library technology. The display control unit is configured to receive a display configuration information request sent by the display configuration unit 520 in the cloud management platform. The display configuration information request carries the display configuration information. The display control unit may configure the rendering unit based on the display configuration information. This reduces processing pressure of the cloud management platform 500 and improves configuration efficiency of the cloud instance. When the graphics program is run, the compilation unit 410 of the cloud instance 400 compiles the graphics program code to obtain the graphics program, and may first load the display control unit. The display control unit automatically loads the corresponding software rendering unit 421, local hardware rendering unit 422, or remote hardware rendering unit 423 based on previous configuration. Specifically, the display control unit may be loaded in a manner of loading a dynamic link library, so that the compilation unit 410 automatically loads the display control unit after compiling the graphics program code to obtain the graphics program. Similarly, the rendering unit 420 may also be loaded in a manner of a dynamic link library. A Windows platform is used as an example. After the graphics program is run, a dynamic link library in which the display control unit is located may be automatically loaded by using a registry, and the display control unit starts the previously configured rendering unit to implement image rendering and obtain the graphic. It should be understood that the foregoing manner of the dynamic link library is used as an example for description. In this application, another technical means is alternatively used to implement automatic loading of the display control unit and the rendering unit. This is not specifically limited in this application.

It may be understood that, configuring the display control unit in the cloud instance 400 can reduce the processing pressure of the cloud management platform 500 and separate, to the display control unit for processing, steps of configuring the rendering unit 420. In addition, in a process of running the graphics program, the compilation unit 410 may load the display control unit, and the display control unit starts the previously configured rendering unit, so that implementation of the solution only needs to add the display control unit and the rendering unit in the manner of the dynamic link library, and does not need to modify the original compilation unit 410. This improves universality and feasibility of the solution.

The output unit 430 is configured to send the graphic generated by the rendering unit 420 to the client 300, so that the display unit 320 of the client 300 displays the graphic to the tenant.

In a specific implementation, the output unit 430 performs image data encoding on the graphic, and sends an encoding result to the client 300. After receiving the encoding result, the display unit 320 of the client 300 performs decoding in a corresponding decoding scheme, and then displays the graphic. An encoding scheme may be H.264, H.265, or the like, or may be another encoding scheme or a user-defined encoding scheme. This is not specifically limited in this application.

In a specific implementation, the output unit 430 performs data communication with the client 300 by using a web real-time communication (web real-time communication, webRTC) technology. WebRTC is an API that supports a web browser to perform a real-time audio and video conversation. A transmission manner is simple and convenient. A web audio and video communication function can be implemented without an additional plug-in or application program.

In an embodiment, the rendering mode further includes a non-image rendering mode. That is, the program code uploaded by the tenant is non-graphics program code, and image rendering does not need to be performed when the non-graphics program code is run. A running result is usually in a form of character string. In this case, when the cloud management platform 500 selects or creates the cloud instance 400, the display configuration unit 520 does not need to configure the rendering unit 420 of the cloud instance 400. When the cloud instance 400 runs the program code, after the compilation unit 410 compiles the program code, the cloud instance 400 runs compiled program code to obtain an output result, and sends the output result to the client 300 by using the output unit 430. The output result is usually a character string.

It should be understood that quantities of clients 300 and cloud instances 400 in FIG. 2 are used as examples for description. In a specific implementation, the program development system provided in this application includes more clients 300 and more cloud instances 400. With reference to a specific application scenario of a public cloud, the following describes the program development system provided in this application by using an example.

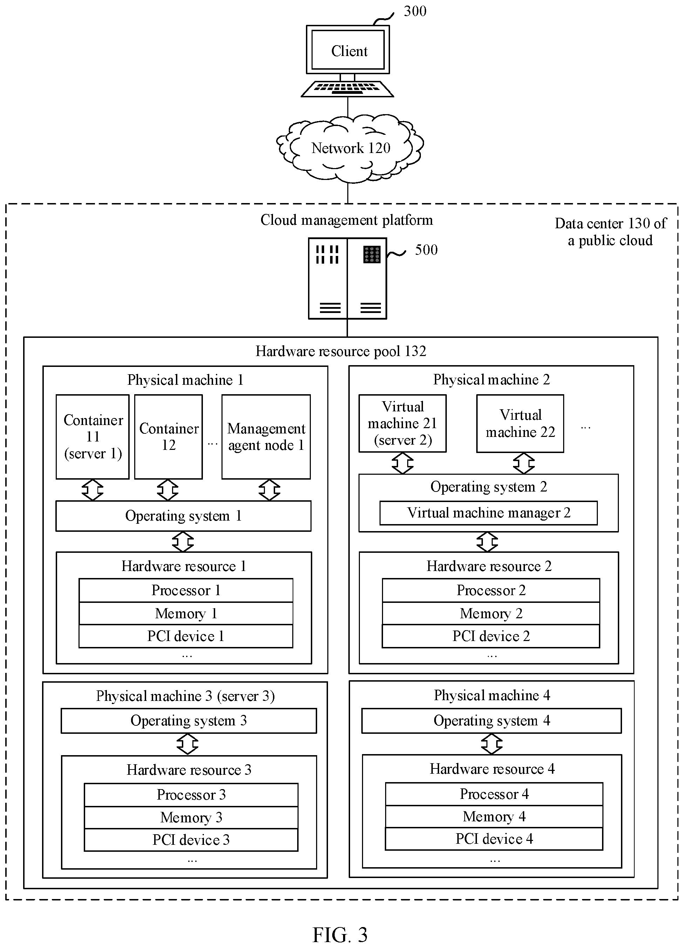

FIG. 3 is a schematic diagram of an architecture of a cloud technology-based graphics program online development system in a public cloud scenario according to this application. The system is deployed in a public cloud, the system includes a client 300 and a data center 130 of the public cloud, and the client 300 and the data center 130 of the public cloud are connected through a network 120. The network 120 is a public network, for example, an Internet (internet).

For a description of the client 300, refer to the embodiment in FIG. 1. Details are not described herein again. It should be understood that, in FIG. 2, an example in which there is one client 300 and the client 300 is a personal computer is used for description. However, this is not specifically limited in this application.

The data center 130 of the public cloud provides a shared resource service for a tenant. The shared resource service includes an OBS, an SFS, a cloud phone (cloud phone) service, a content delivery network (content delivery network, CDN) service, a cloud backup and recovery (cloud backup and recovery, CBR) service, a data admin service (data admin service, DAS), and the like. A type of the shared resource service provided by the data center 130 of the public cloud is not limited in this application.

For example, the data center 130 of the public cloud includes a cloud management platform 500 and a hardware resource pool 132. It should be understood that a division manner shown in FIG. 2 is used as an example for description. The data center 130 of the public cloud is alternatively divided in another manner. This application does not limit a division manner of the data center 130 of the public cloud.

The cloud management platform 500 may be implemented by a general-purpose physical server, for example, an ARM server or an X86 server, or may be a virtual machine (virtual machine, VM) implemented by using a network functions virtualization (network functions virtualization, NFV) technology. Alternatively, the cloud management platform 500 may be a virtual machine or a physical machine in the hardware resource pool 132. This is not specifically limited in this application.

The hardware resource pool 132 includes at least one physical machine (in FIG. 3, an example in which the resource pool includes a physical machine 1, a physical machine 2, a physical machine 3, and a physical machine 4 is used for description). The physical machine is a general-purpose physical server, for example, an ARM server or an X86 server. This is not specifically limited in this application. The physical machine in the hardware resource pool 132 communicates with another physical machine or the cloud management platform 500 by using an internal network. Each physical machine includes at least a hardware resource (for example, the physical machine 1 includes a hardware resource 1, and the physical machine 2 includes a hardware resource 2) and an operating system (for example, an operating system 1 and an operating system 2). Some physical machines further include a plurality of virtual instances. The virtual instances may be containers (for example, the physical machine 1 includes a container 11 and a container 12), or may be virtual machines (for example, a virtual machine 21 and a virtual machine 22). A plurality of virtual instances in the physical machine share the operating system and the hardware resource in the physical machine.

The hardware resource (for example, the hardware resource 1 and the hardware resource 2) includes various hardware resources of the physical machine, such as a processor 1, a memory 1, and a PCI device 1, and further includes another hardware resource that may be required by the tenant. This is not specifically limited in this application. The operating system (for example, the operating system 1 and the operating system 2) is an operating system applicable to a container, a virtual machine, or a physical machine, for example, an Android (Android) operating system, a Windows operating system, or a Linux operating system. This is not specifically limited in this application. It should be noted that the operating system may be an official complete operating system, or may be an operating system obtained after some driver modules of an official complete operating system are modified to adapt to a running mode of a server. This is not specifically limited in this application. In addition, a quantity of physical machines, a quantity of virtual machines, a quantity of containers, and a type and a quantity of hardware resources shown in FIG. 3 are merely used as an example for description. This is not specifically limited in this application.

In this embodiment of this application, the client 300 obtains a graphics program online development request and graphics program code that are input by the tenant. For descriptions of the graphics program online development request and the graphics program code, refer to the embodiment in FIG. 2. Details are not described herein again. In a specific implementation, the client 300 may be a console (console) or an application programming interface (application programming interface, API) of the cloud management platform 500. The console is specifically an application program or a web page for interaction between the tenant and the cloud management platform 500. The tenant purchases and uses various cloud services by using the console. It should be understood that the foregoing example is used for description. This is not specifically limited in this application.

The cloud management platform 500 receives the graphics program online development request sent by the client 300. The graphics program online development request includes display configuration information, and the display configuration information may include cloud instance specification information, a rendering mode, and a corresponding rendering parameter. The cloud management platform 500 creates, from the hardware resource pool 132 based on the specification information in the display configuration information and a resource idle status of the hardware resource pool 132, a cloud instance 400 that meets the display configuration information. A type of the instance may be a virtual machine, a container, or a BMS.

In a specific implementation, if the graphics program online development request is to create a container whose display configuration information is X, after receiving the display configuration information of the cloud instance, the cloud management platform 500 determines, based on a resource idle status of the hardware resource pool 132 and the display configuration information X, a physical machine (for example, the physical machine 1 in FIG. 3) that creates the container, and then sends a container creation request to a management agent node in the physical machine (for example, a management agent node 1 in the physical machine 1 in FIG. 3). The container creation request carries the display configuration information X. The cloud management agent node 1 creates, based on the container creation request, the container (for example, the container 11 in FIG. 3) whose display configuration information is X as a cloud instance 1. If the graphics program online development request is to create a virtual machine whose display configuration information is Y, after receiving the display configuration information of the cloud instance, the cloud management platform 500 determines, based on the display configuration information Y and a resource idle status of the hardware resource pool 132, a physical machine (for example, the physical machine 2 in FIG. 3) that creates the virtual machine, and then sends a virtual machine creation request to a virtual machine manager (for example, a virtual machine manager 2 in FIG. 3) on the physical machine The virtual machine creation request carries the display configuration information Y The virtual machine manager 2 creates, based on the virtual machine creation request, the virtual machine (for example, the virtual machine 21 in FIG. 3) whose display configuration information is Y, and obtains a cloud instance 2. If the graphics program online development request is to create a physical machine whose display configuration information is Z, after receiving the display configuration information of the cloud instance, the cloud management platform 500 determines, based on the display configuration information Z and a resource idle status of the hardware resource pool 132, the physical machine that meets the display configuration information Z, and obtains a cloud instance 3. The foregoing example is used for description. This is not specifically limited in this application.

It should be noted that, after creating, based on the tenant's request, the cloud instance matching the display configuration information, the cloud management platform 500 sends a connection manner, for example, a connection password, of the cloud instance to the client 300 of the tenant. The tenant uses the client 300 to connect to the cloud instance 400 at any time and at any place based on the connection password, to implement program development anytime and anywhere. It should be understood that the foregoing example is used for description. This is not specifically limited in this application.

When the tenant runs a graphics program, the cloud instance 400 loads a configured rendering unit 420 to implement an image API in the graphics program, completes image rendering, obtains a graphic, and sends the graphic to the client 300 for display. For details, refer to the description in the embodiment in FIG. 2. Details are not described herein again.

In conclusion, this application provides the cloud technology-based graphics program online development system. The cloud management platform in the system receives the graphics program online development request input by the tenant, selects or creates the cloud instance for image rendering in the cloud instance resource pool, and configures a graphics processing capability required by a user for the cloud instance, such as a software rendering capability, a local hardware rendering capability, or a remote hardware rendering capability. In this way, after the cloud instance receives the graphics program code sent by the client, the cloud instance may invoke a previously configured image rendering capability to render the graphic, and send the graphic to the client for display. This implements online development of the cloud technology-based graphics program.

With reference to the accompanying drawings, the following explains and describes a cloud technology-based graphics program online development method provided in this application.

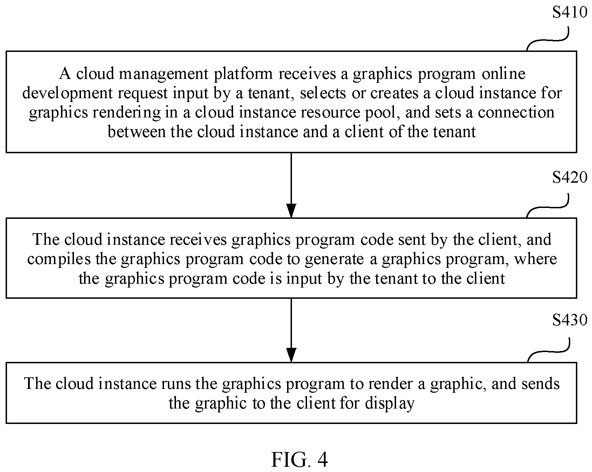

As shown in FIG. 4, this application provides a cloud technology-based graphics program online development method. The method may be applied to the cloud technology-based graphics program online development systems shown in FIG. 2 and FIG. 3. The method may include the following steps.

S410: A cloud management platform receives a graphics program online development request input by a tenant, selects or creates a cloud instance for image rendering in a cloud instance resource pool, and sets a connection between the cloud instance and a client of the tenant.

In an embodiment, the client runs in a browser of a terminal device held by the tenant, the client may be constructed based on a web page development technology, and the web page development technology includes one or more of HTML, JavaScript, and CSS. The terminal device includes a mobile phone, a tablet computer, a personal computer, a smart television, and a game console. The cloud instance includes a virtual machine, a container, or a BMS. For details, refer to the descriptions of the terminal device and the cloud instance in the embodiments in FIG. 1 to FIG. 3. The details are not described herein again.

In an embodiment, the graphics program online development request includes display configuration information, and the cloud management platform may select or create, in the cloud instance resource pool, a cloud instance matching the display configuration information.

In a specific implementation, the display configuration information includes a rendering mode and a rendering parameter, the rendering mode includes one of software rendering, local hardware rendering, or remote hardware rendering, and different rendering modes correspond to different rendering parameters. Software rendering refers to implementing image rendering by using software. Local hardware rendering refers to implementing image rendering by using a GPU of the cloud instance. Remote hardware rendering refers to implementing image rendering by using a GPU of another computing node that is remotely connected to the cloud instance.

Optionally, a rendering parameter corresponding to the software rendering mode includes parameter information required when a graphics program is run to perform software rendering, for example, graphics interface information required for the software rendering. The image interface information herein may include a graphics interface type, version information of a graphics interface, a display resolution, and the like, and may further include other parameter information required for a software rendering process. Examples are not described herein one by one. The graphics interface type includes a graphics device interface (graphics device interface, GDI), direct extension (direct extension, DirectX), an open graphics library (open graphics library, OpenGL), a Vulkan interface, and the like. This is not limited in this application.

Optionally, a rendering parameter corresponding to the local hardware rendering mode includes specification information of a local GPU, for example, specification information such as a model, a standard, and a display resolution of a required local GPU, and further includes parameter information required by another local GPU for image rendering. Examples are not described herein one by one. It should be understood that, as a hardware drive apparatus, a GPU cannot be directly used by the tenant. Generally, a GPU vendor provides a GPU driver according to various standards, such as an OpenGL standard and a DirectX 12 standard. A developer writes graphics program code according to these standards. When the graphics program is run, the GPU driver communicates with a driver program of hardware based on graphics program code written by the tenant, to enable a graphics processing function of GPU hardware, to implement image rendering.

Optionally, a rendering parameter corresponding to the remote hardware rendering mode includes specification information of a remote GPU, for example, a specification, a standard, a display resolution, and information about a local operating system of the remote GPU, and further includes parameter information required when another remote GPU performs image rendering. Examples are not described herein one by one. For descriptions of a specification and a standard of remote hardware, refer to the descriptions of the local hardware rendering. Details are not described herein again.

It should be understood that the tenant determines a rendering mode according to a service requirement of the tenant. For example, if a low image rendering capability is required by the tenant, the tenant may select the software rendering mode to perform image rendering. If a high image rendering capability is required by the tenant, the tenant may select the local or the remote hardware rendering. If the tenant frequently develops graphics programs, the tenant may select the local hardware rendering. If the tenant occasionally develops graphics programs, the tenant may select the remote hardware rendering to reduce development costs. After determining each rendering mode, the tenant may determine a corresponding rendering parameter according to a service requirement. For example, in the software rendering mode, if the service requirement of the tenant is to perform application development by using OpenGL, in the graphics program online development request input by the tenant, the rendering mode is the software rendering, and the corresponding rendering parameter is OpenGL.

Optionally, the display configuration information further includes cloud instance specification information, for example, an operating system specification, a processor specification, a memory specification, a technology stack type, and a life cycle of the cloud instance. The operating system specification includes an operating system type and version information of a cloud instance 400, for example, Windows 10 and Ubuntu 20.04. The processor specification includes parameter information such as memory, a dominant frequency, a quantity of cores, and a quantity of threads of a processor. The memory specification includes parameter information such as a storage capacity and a bandwidth. The technology stack type is a technical stack type of the graphics program code input by the tenant, for example, Java, C/C++, Python, NodeJS, and GO. The life cycle means that after the tenant has not performed any operation on a client 300 for more than a preset waiting time, a connection between the cloud instance 400 and the client 300 is actively disconnected, and the waiting time is the life cycle. The tenant selects a life cycle of 30 minutes, 60 minutes, 4 hours, 24 hours, or "never closed" based on a use habit. It should be understood that the cloud instance specification information is used as an example for description. More or fewer types of specification information are further set based on a requirement of the tenant. For example, if a developer needs to configure an additional database, the specification information further includes a database type, interface information, and the like. This is not limited in this application.

Optionally, the display configuration information further includes a charging mode. The charging mode includes charging by time and charging by demand. The charging by time includes charging by day, by month, by quarter, or by year. The charging by demand includes charging by storage resource and charging by computing resource. The storage resource is a disk storage resource occupied by the cloud instance from creation to deletion. The computing resource is a sum of CPU, memory, and network resources consumed by the cloud instance 400 from creation to deletion. It should be understood that the foregoing charging mode is used for description. This is not specifically limited in this application.

In an embodiment, the cloud management platform may configure a rendering unit of the cloud instance based on the display configuration information, so that the cloud instance has an image rendering capability required by the tenant. Different rendering modes have different configuration methods. The following separately describes the configuration methods of the three rendering modes.

Optionally, if the rendering mode is the software rendering, the rendering parameter includes the graphics interface information. The cloud management platform may select or create, in the cloud instance resource pool, a cloud instance matching the cloud instance specification information, and then configure a corresponding graphics interface for the cloud instance based on the graphics interface information.

Optionally, if the rendering mode is the local hardware rendering, the rendering parameter includes the specification information of the local GPU, and the cloud management platform may select or create, in the cloud instance resource pool, a cloud instance that matches the cloud instance specification information and the specification information of the local GPU.

Optionally, if the rendering mode is the remote hardware rendering, the rendering parameter includes the specification information of the remote GPU. The cloud management platform may select or create, in the cloud instance resource pool, a cloud instance matching the cloud instance specification information, obtain a connection address of a remote GPU matching the specification information of the remote GPU, and send the connection address to the cloud instance.

S420: The cloud instance receives the graphics program code sent by the client, and compiles the graphics program code to generate the graphics program, where the graphics program code is input by the tenant to the client.

Compilation refers to translating one language into another language. For example, a developer develops program source code by using a high-level computer language (for example, a C language or a C++ language), and converts, through compilation, the program source code into machine language code (for example, binary code) for machine recognition and running.

In a specific implementation, before the graphics program code is compiled, the graphics program code input by the tenant is further checked, for example, syntax validity detection and an identified compilation problem, and a check result is fed back to the client for the tenant to modify. It should be understood that the foregoing example is used for description. This is not limited in this application.

The graphics program code uploaded by the tenant is program source code developed by the tenant by using a high-level computer language. The high-level computer language includes a plurality of technical stack types, such as a C language, a C++ language, Fortran, Java, Python, NodeJS, and GO. This is not limited in this application.

In a specific implementation, the client may be a web-based program editor in the browser. The tenant may edit and input the graphics program code by using the program editor. The graphics program online development request may be input by the tenant by using the web-based program editor, or may be input by the tenant by using a new window, a browser page, or a tab page. This is not limited in this application.

In a specific implementation, the cloud management platform may first receive the graphics program online development request, and then receive the graphics program code input by the tenant, or may first receive the graphics program code, and then receive the graphics program online development request input by the tenant. This is not limited in this application. For example, the client may first display, to the tenant, an interface for inputting the graphics program online development request, and then display, to the tenant, the web-based program editor, to obtain the graphics program code input by the tenant; or first display, to the tenant, the web-based program editor, and when detecting that the graphics program code input by the tenant is the graphics program, prompt, in a pop-up window or in another form, the tenant to input the graphics program online development request. It should be understood that the foregoing example is used for description. This is not limited in this application.

S430: The cloud instance runs the graphics program to render a graphic, and sends the graphic to the client for display.

Specifically, after the tenant starts the graphics program via the client, the client sends a program running instruction to the cloud instance. After step S420, the cloud instance has the corresponding image rendering capability based on the display configuration information of the tenant, and therefore may invoke a configured interface, a driver, or a remote invocation interface to implement an image rendering function in the graphics program.

In a specific implementation, if the rendering mode is the software rendering, the cloud instance invokes the configured graphics interface to implement the image rendering function, to obtain the graphic. If the rendering mode is the local hardware rendering, the cloud instance may invoke a drive interface of the local GPU, and use the local GPU to implement the image rendering function, to obtain the graphic. If the rendering mode is the remote hardware rendering, the cloud instance invokes a driver of the remote GPU based on the connection address of the remote GPU, and uses the remote GPU to implement the image rendering function, to obtain the graphic.

In an embodiment, the rendering mode further includes a non-image rendering mode. That is, the graphics program code uploaded by the tenant is non-graphics program code, and image rendering does not need to be performed when the non-graphics program code is run. A running result is usually in a form of character string. In this case, the cloud instance runs the graphics program code, and outputs a character string corresponding to the running result to the client for display.

In an embodiment, the cloud instance performs image data encoding on the graphic, and then sends an encoding result to the client. After receiving the encoding result, the client may decode the encoding result in a decoding scheme corresponding to an encoding scheme, to obtain the graphic, and display the graphic to the tenant. The encoding scheme may be H.264, H.265, or the like, or may be another encoding scheme or a user-defined encoding scheme. This is not specifically limited in this application.

In a specific implementation, when sending the graphic to the client, the cloud instance may perform data communication with the client by using a web real-time communication (web real-time communication, webRTC) technology. WebRTC is an API that supports a web browser to perform a real-time audio and video conversation. A transmission manner is simple and convenient. A web audio and video communication function is implemented without an additional plug-in or client.

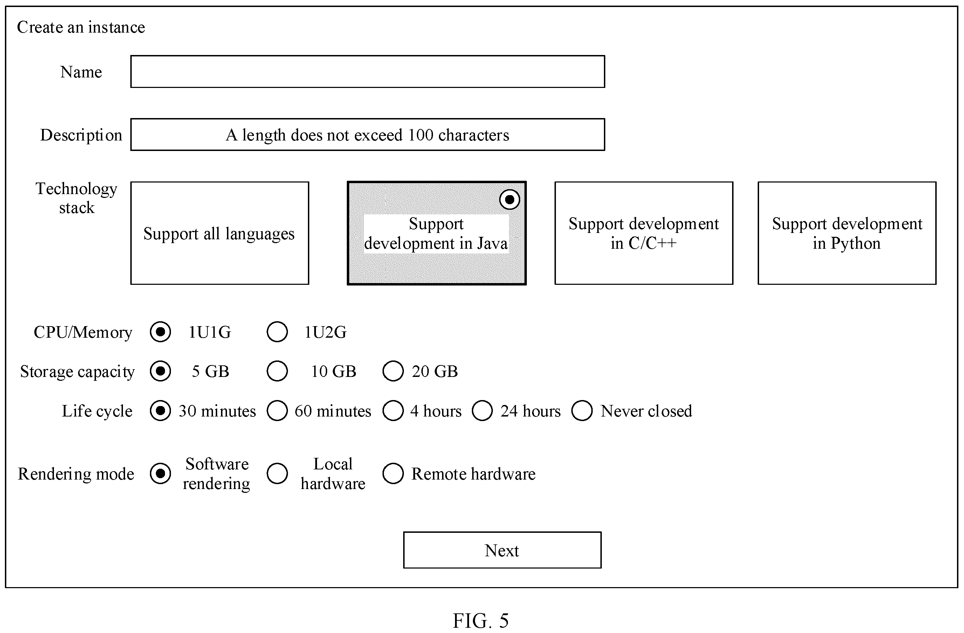

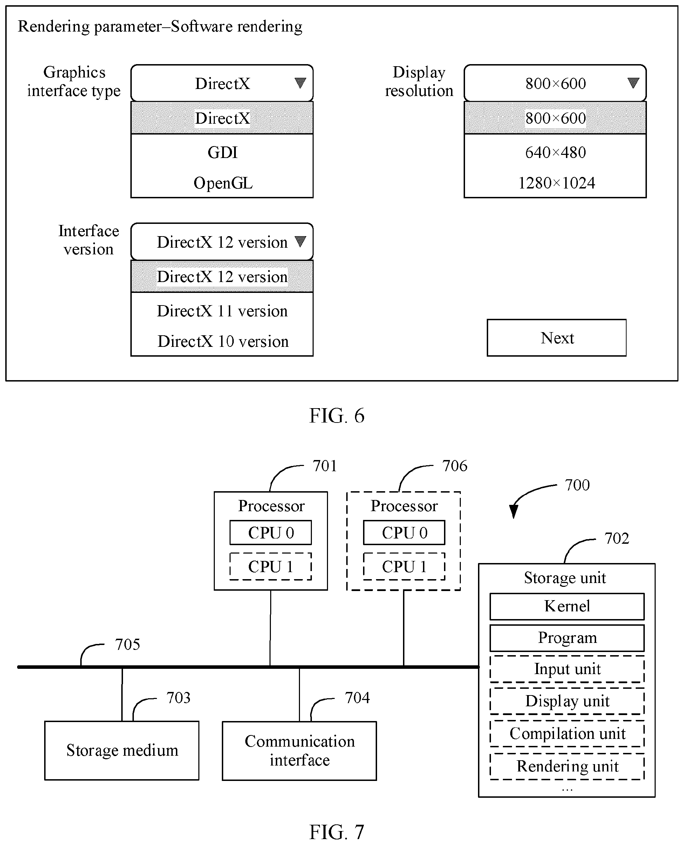

FIG. 5 and FIG. 6 are example interfaces of a client according to this application. The client may be a console of a cloud data center. With reference to the foregoing content, it can be learned that the client is configured to obtain display configuration information input by a tenant. The display configuration information may include cloud instance specification information, a rendering mode, a corresponding rendering parameter, and the like. In examples shown in FIG. 5 and FIG. 6, FIG. 5 is used to obtain the cloud instance specification information and the rendering mode in the display configuration information, FIG. 6 is used to obtain the rendering parameter corresponding to the rendering mode selected by the tenant.

As shown in FIG. 5, the cloud instance specification information may include an instance name of a cloud instance (for description of the instance, refer to the descriptions in embodiments in FIG. 2 and FIG. 3, and details are not described herein again), an instance description, a technology stack type that needs to be supported, a CPU specification, a storage specification, a life cycle, and the rendering mode. In the example shown in FIG. 5, the tenant selects Java development as the technology stack type, 1U1G as the CPU specification, 5 GB as the storage capacity, 30 minutes as the life cycle, and software rendering as the rendering mode. With reference to the foregoing content, it can be learned that different rendering modes correspond to different rendering parameters. After the tenant clicks a Next button, a rendering parameter input interface shown in FIG. 6 may be displayed. The tenant may select a required rendering parameter according to a service requirement. In FIG. 6, the tenant selects DirectX as a graphics interface type, DirectX 12 as an interface version, and 800×600 as a display resolution. After the tenant clicks Next, the client may send, to a cloud management platform, the display configuration information input by the tenant in the examples in FIG. 5 and FIG. 6. After creating the cloud instance that meets a condition, the cloud management platform configures a software rendering unit of the cloud instance based on the rendering parameter. When the cloud instance receives a graphics program code running instruction sent by the tenant, the cloud instance may load the configured software rendering unit. The configured software rendering unit has a capability of processing a DirectX 12 type of graphics API, and implements an image rendering function required by a graphics program, to obtain a graphic. It may be understood that FIG. 5 and FIG. 6 are used as examples for description. A specific interface of the client is not limited in this application.

In conclusion, this application provides the cloud technology-based graphics program online development method. In the method, the cloud management platform receives the graphics program online development request input by the tenant, selects or creates the cloud instance for image rendering in the cloud instance resource pool, and configures a graphics processing capability required by a user for the cloud instance, such as a software rendering capability, a local hardware rendering capability, or a remote hardware rendering capability. In this way, after the cloud instance receives the graphics program code sent by the client, the cloud instance may invoke a previously configured image rendering capability to render the graphic, and send the graphic to the client for display. This implements online development of the cloud technology-based graphics program, resolves a problem that a current cloud technology-based program online development method cannot support graphics program development, and improves user experience.

FIG. 7 is a schematic diagram of a structure of a computing device according to this application. A computing device 700 is the cloud instance, the cloud management platform, or the client in embodiments in FIG. 1 to FIG. 6. The client may be a terminal device, the cloud instance is a physical server, a virtual machine, or a container, and the cloud management platform may be a physical server, a virtual machine, or a server cluster. For specific descriptions, refer to the embodiment in FIG. 2. This is not limited in this application.

Further, the computing device 700 includes a processor 701, a storage unit 702, a storage medium 703, and a communication interface 704. The processor 701, the storage unit 702, the storage medium 703, and the communication interface 704 communicate with each other by using a bus 705, or communicate with each other through another means such as wireless transmission.

The processor 701 includes at least one general-purpose processor, for example, a CPU, an NPU, or a combination of a CPU and a hardware chip. The hardware chip is an application-specific integrated circuit (Application-Specific Integrated Circuit, ASIC), a programmable logic device (Programmable Logic Device, PLD), or a combination thereof. The PLD is a complex programmable logic device (Complex Programmable Logic Device, CPLD), a field-programmable gate array (Field-Programmable Gate Array, FPGA), a generic array logic (Generic Array Logic, GAL), or any combination thereof. The processor 701 executes various types of digital storage instructions, for example, software or a firmware program stored in the storage unit 702, so that the computing device 700 provides a wide range of services.

In a specific implementation, in an embodiment, the processor 701 includes one or more CPUs, such as a CPU 0 and a CPU 1 shown in FIG. 7.

In a specific implementation, in an embodiment, the computing device 700 also includes a plurality of processors, such as the processor 701 and a processor 706 shown in FIG. 7. Each of the processors may be a single-core processor (single-CPU), or may be a multi-core processor (multi-CPU). The processor herein is one or more devices, circuits, and/or processing cores configured to process data (for example, computer program instructions).

The storage unit 702 is configured to store graphics program code, and the processor 701 controls execution of the graphics program code, to perform the processing steps of the workflow system in any one of embodiments in FIG. 1 to FIG. 7. The graphics program code includes one or more software units.

When the computing device is the client, the one or more software units are the input unit 310 and the display unit in the embodiment in FIG. 2. The input unit is configured to obtain the graphics program code and a graphics program online development request from a tenant, and the display unit is configured to display a graphic sent by the cloud instance to the tenant. For the foregoing specific implementation, refer to the method embodiments in FIG. 4 to FIG. 6. Details are not described herein again.

When the computing device is the cloud instance, the one or more software units are the compilation unit, the rendering unit, and the output unit in the embodiment in FIG. 2. The compilation unit is configured to: receive the graphics program code sent by the client, and compile the graphics program code to obtain a graphics program. The rendering unit is configured to: run the graphics program, and invoke a rendering capability (such as a software rendering capability, a local hardware rendering capability, and a remote hardware rendering capability) configured by the cloud management platform for the rendering unit, to implement image rendering to obtain a graphic. The output unit is configured to send the graphic to the client. For configuration manners of a local hardware rendering mode and a remote hardware rendering mode, refer to the descriptions in embodiments in FIG. 1 to FIG. 6. Details are not described herein again.

When the computing device is the cloud management platform, the one or more software units may include the creation unit and the display configuration unit. The creation unit is configured to: receive display configuration information sent by the client, create a cloud instance that meets a condition based on cloud instance specification information in the display configuration information, configure a corresponding rendering capability for the cloud instance based on a rendering mode and a rendering parameter in the display configuration information, and establish a communication connection between the cloud instance and the client. For details, refer to the descriptions of the cloud management platform in embodiments in FIG. 1 to FIG. 6. Details are not described herein again.

The storage unit 702 includes a read-only memory and a random access memory, and provides instructions and data for the processor 701. The storage unit 702 further includes a non-volatile random access memory. For example, the storage unit 702 further stores information about a device type.

The storage unit 702 is a volatile memory or a non-volatile memory, or includes both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. As an example description rather than a limitation, the RAM may be in many forms, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Alternatively, the RAM may be a hard disk (hard disk), a USB (universal serial bus, USB) flash drive, a flash (flash) memory, an SD card (secure digital memory Card, SD card), a memory stick, and the like. The hard disk is a hard disk drive (hard disk drive, HDD), a solid state disk (solid state disk, SSD), a mechanical hard disk (mechanical hard disk, HDD), or the like. This is not specifically limited in this application.

The storage medium 703 is a carrier for storing data, for example, a hard disk (hard disk), a USB (universal serial bus, USB) flash drive, a flash (flash) memory, an SD card (secure digital memory Card, SD card), or a memory stick. The hard disk may be a hard disk drive (hard disk drive, HDD), a solid state disk (solid state disk, SSD), a mechanical hard disk (mechanical hard disk, HDD), or the like. This is not specifically limited in this application.

The communication interface 704 is a wired interface (for example, an Ethernet interface), or may be an internal interface (for example, a Peripheral Component Interconnect express (Peripheral Component Interconnect express, PCIe) bus interface), a wired interface (for example, an Ethernet interface), or a wireless interface (for example, a cellular network interface or a wireless local area network interface), and is configured to communicate with another server or unit. In a specific implementation, the communication interface 704 is configured to receive a packet, so that the processor 701 or the processor 706 processes the packet.

The bus 705 is a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL) bus, a cache coherent interconnect for accelerators (cache coherent interconnect for accelerators, CCIX) bus, or the like. The bus 705 is classified into an address bus, a data bus, a control bus, and the like.

In addition to a data bus, the bus 705 further includes a power bus, a control bus, a status signal bus, and the like. However, for a clear description, various types of buses in the figure are marked as the bus 705.

It should be noted that FIG. 7 is merely a possible implementation of this embodiment of this application. During actual application, the computing device 700 may alternatively include more or fewer components. This is not limited herein. For content that is not shown or not described in this embodiment of this application, refer to related descriptions in embodiments in FIG. 1 to FIG. 6. Details are not described herein again.

An embodiment of this application provides a computer-readable storage medium. The computer-readable storage medium stores computer instructions. When the computer instructions are run on a computer, the computer is enabled to perform a data access method in the foregoing method embodiments.

An embodiment of this application provides a computer program product including instructions. The computer program product includes a computer program or instructions. When the computer program or the instructions are run on a computer, the computer is enabled to perform a data access method in the foregoing method embodiments.

All or some of the foregoing embodiments are implemented by software, hardware, firmware, or any combination thereof. When software is used to implement embodiments, all or some of the foregoing embodiments are implemented in a form of computer program product. The computer program product includes at least one computer instruction. When the computer program instructions are loaded and executed on a computer, procedure or functions according to embodiments of the present invention are all or partially generated. The computer may be a general-purpose computer, a dedicated computer, a computer network, or another programmable apparatus. The computer instructions are stored in a computer-readable storage medium or are transmitted from a computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium is any usable medium accessible by a computer, or a data storage node, such as a server or a data center, integrating at least one usable medium set. The usable medium is a magnetic medium (for example, a floppy disk, a hard disk, or a magnetic tape), an optical medium (for example, a high-density digital video disc (digital video disc, DVD)), or a semiconductor medium. The semiconductor medium is SSD.

The foregoing descriptions are merely specific implementations of the present invention, but are not intended to limit the protection scope of the present invention. Any equivalent modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cloud technology-based graphics program online development method, comprising:
receiving, by a cloud management platform, a graphics program online development request input by a tenant, selecting or creating a cloud instance for image rendering in a cloud instance resource pool, and setting a connection between the cloud instance and a client of the tenant;
receiving, by the cloud instance, graphics program code sent by the client, and compiling the graphics program code to generate a graphics program, wherein the graphics program code is input by the tenant to the client; and
running, by the cloud instance, the graphics program to render a graphic, and sending the graphic to the client for display.

2. The method according to claim 1, wherein the graphics program online development request comprises display configuration information, and the selecting or creating a cloud instance with a image rendering function in a cloud instance resource pool comprises:
selecting or creating, in the cloud instance resource pool, a cloud instance matching the display configuration information.

3. The method according to claim 2, wherein the display configuration information comprises cloud instance specification information, a rendering mode, and a rendering parameter, the rendering mode comprises one of software rendering, local hardware rendering, or remote hardware rendering, and different rendering modes correspond to different rendering parameters.

4. The method according to claim 3, wherein if the rendering mode is the software rendering, the rendering parameter comprises graphics interface information required for the software rendering;
the selecting or creating, in the cloud instance resource pool, a cloud instance matching the display configuration information comprises:
selecting or creating, by the cloud management platform in the cloud instance resource pool, a cloud instance matching the cloud instance specification information; and
configuring a corresponding graphics interface for the cloud instance based on the graphics interface information; and
the running, by the cloud instance, the graphics program to render a graphic comprises:
running, by the cloud instance, the graphics program, and invoking the graphics interface to render the graphic.

5. The method according to claim 3, wherein if the rendering mode is the local hardware rendering, the rendering parameter comprises specification information of a local graphics processing unit GPU;
the selecting or creating, in the cloud instance resource pool, a cloud instance matching the display configuration information comprises:
selecting or creating, by the cloud management platform in the cloud instance resource pool, a cloud instance that matches the cloud instance specification information and the specification information of the local GPU; and
the running, by the cloud instance, the graphics program to render a graphic comprises:
running, by the cloud instance, the graphics program, invoking a drive interface of the local graphics processing unit GPU, and rendering the graphic by using the local GPU.

6. The method according to claim 3, wherein if the rendering mode is the remote hardware rendering, the rendering parameter comprises specification information of a remote GPU;
the selecting or creating, in the cloud instance resource pool, a cloud instance matching the display configuration information comprises:
selecting or creating, by the cloud management platform in the cloud instance resource pool, a cloud instance matching the cloud instance specification information; and
obtaining, by the cloud management platform, a connection address of the remote GPU based on the specification information of the remote GPU, and sending the connection address to the cloud instance; and
the running, by the cloud instance, the graphics program to render a graphic comprises:
running, by the cloud instance, the graphics program, invoking a driver of the remote GPU based on the connection address, and rendering the graphic by using the remote GPU.

7. The method according to any one of claims 1 to 6, wherein the client runs in a browser of a terminal device held by the tenant, the client is constructed based on a web page development technology, and the web page development technology comprises one or more of a hypertext markup language HTML, JavaScript, and cascading style sheets CSS.

8. The method according to claim 7, wherein the terminal device comprises a mobile phone, a tablet computer, a personal computer, a smart television, and a game console.

9. The method according to any one of claims 1 to 8, wherein the cloud instance comprises a virtual machine, a container, or a bare metal server.

10. A cloud technology-based graphics program online development system, comprising:
a cloud management platform, configured to: receive a graphics program online development request input by a tenant, select or create a cloud instance for image rendering in a cloud instance resource pool, and set a connection between the cloud instance and a client of the tenant; and
the cloud instance, configured to: receive graphics program code sent by the client, and compile the graphics program code to generate a graphics program, wherein the graphics program code is input by the tenant to the client, and
the cloud instance is configured to: run the graphics program to render a graphic, and send the graphic to the client for display.

11. The system according to claim 10, wherein the graphics program online development request comprises display configuration information; and
the cloud management platform is configured to select or create, in the cloud instance resource pool, a cloud instance matching the display configuration information.

12. The system according to claim 11, wherein the display configuration information comprises cloud instance specification information, a rendering mode, and a rendering parameter, the rendering mode comprises one of software rendering, local hardware rendering, or remote hardware rendering, and different rendering modes correspond to different rendering parameters.

13. The system according to claim 12, wherein if the rendering mode is the software rendering, the rendering parameter comprises graphics interface information required for the software rendering;
the cloud management platform is configured to: select or create, in the cloud instance resource pool, a cloud instance matching the cloud instance specification information, and configure a corresponding graphics interface for the cloud instance based on the graphics interface information; and
the cloud instance is configured to: run the graphics program, and invoke the graphics interface to render the graphic.

14. The system according to claim 12, wherein if the rendering mode is the local hardware rendering, the rendering parameter comprises specification information of a local graphics processing unit GPU;
the cloud management platform is configured to select or create, in the cloud instance resource pool, a cloud instance that matches the cloud instance specification information and the specification information of the local GPU; and
the cloud instance is configured to: run the graphics program, invoke a drive interface of the local graphics processing unit GPU, and render the graphic by using the local GPU.

15. The system according to claim 12, wherein if the rendering mode is the remote hardware rendering, the rendering parameter comprises specification information of a remote GPU;
the cloud management platform is configured to: select or create, in the cloud instance resource pool, a cloud instance matching the cloud instance specification information, obtain a connection address of the remote GPU based on the specification information of the remote GPU, and send the connection address to the cloud instance; and
the cloud instance is configured to: run the graphics program, invoke a driver of the remote GPU based on the connection address, and render the graphic by using the remote GPU.

16. The system according to any one of claims 10 to 15, wherein the client runs in a browser of a terminal device held by the tenant, the client is constructed based on a web page development technology, and the web page development technology comprises one or more of a hypertext markup language HTML, JavaScript, and cascading style sheets CSS.

17. The system according to claim 16, wherein the terminal device comprises a mobile phone, a tablet computer, a personal computer, a smart television, and a game console.

18. The system according to any one of claims 10 to 16, wherein the cloud instance comprises a virtual machine, a container, or a bare metal server.

19. A cloud instance, applied to a cloud technology-based graphics program online development system, wherein the cloud instance comprises:
a compilation unit, configured to: receive graphics program code sent by a client, and compile the graphics program code to generate a graphics program, wherein the graphics program code is input by a tenant to the client;
a rendering unit, configured to run the graphics program to render a graphic; and
an output unit, configured to send the graphic to the client for display.

20. The cloud instance according to claim 19, wherein the cloud technology-based graphics program online development system comprises a cloud management platform, and the cloud instance is a cloud instance that is selected or created by the cloud management platform in a cloud instance resource pool after the cloud management platform receives display configuration information input by the tenant and that matches the display configuration information.

21. The cloud instance according to claim 20, wherein the display configuration information comprises cloud instance specification information, a rendering mode, and a rendering parameter, the rendering mode comprises one of software rendering, local hardware rendering, or remote hardware rendering, and different rendering modes correspond to different rendering parameters.

22. The cloud instance according to claim 21, wherein if the rendering mode is the software rendering, the rendering parameter comprises graphics interface information required for the software rendering; and
the rendering unit is configured to: run the graphics program, and invoke a graphics interface corresponding to the graphics interface information, to render the graphic, wherein the graphics interface is configured by the cloud management platform for the cloud instance based on the graphics interface information.

23. The cloud instance according to claim 21, wherein if the rendering mode is the local hardware rendering, the rendering parameter comprises specification information of a local graphics processing unit GPU; and
the rendering unit is configured to: run the graphics program, invoke a drive interface of the local graphics processing unit GPU, and render the graphic by using the local GPU.

24. The cloud instance according to claim 21, wherein if the rendering mode is the remote hardware rendering, the rendering parameter comprises specification information of a remote GPU; and
the rendering unit is configured to: run the graphics program, obtain a connection address of the remote GPU corresponding to the specification information of the remote GPU, invoke a driver of the remote GPU, and render the graphic by using the remote GPU, wherein the connection address of the remote GPU is sent by the cloud management platform to the cloud instance.

25. A computing device, comprising a processor and a memory, wherein the memory is configured to store code, and the processor is configured to execute the code to implement the method implemented by the cloud management platform or the cloud instance according to any one of claims 1 to 9.
